(19) Europäisches Patentamt
European Patent Office
Office européen des brevets

(11) **EP 3 384 461 B1**

(12) **EUROPÄISCHE PATENTSCHRIFT**

(45) Veröffentlichungstag und Bekanntmachung des Hinweises auf die Patenterteilung:
**08.04.2026 Patentblatt 2026/15**

(21) Anmeldenummer: **16805362.7**

(22) Anmeldetag: **29.11.2016**

(51) Internationale Patentklassifikation (IPC):
**G06T 5/73** *(2024.01)*    **G06T 5/10** *(2006.01)*
**G06T 5/50** *(2006.01)*

(52) Gemeinsame Patentklassifikation (CPC):
**G06T 5/73; G06T 5/10; G06T 5/50;**
G06T 2207/10016; G06T 2207/20021;
G06T 2207/20201; G06T 2207/20216

(86) Internationale Anmeldenummer:
**PCT/EP2016/079087**

(87) Internationale Veröffentlichungsnummer:
**WO 2017/093227 (08.06.2017 Gazette 2017/23)**

(54) **VERFAHREN UND VORRICHTUNG ZUR BILDKORREKTUR**

METHOD AND DEVICE FOR IMAGE CORRECTION

PROCÉDÉ ET DISPOSITIF DE CORRECTION D'IMAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.12.2015 DE 102015120967**

(43) Veröffentlichungstag der Anmeldung:
**10.10.2018 Patentblatt 2018/41**

(73) Patentinhaber: **Carl Zeiss AG**
**73447 Oberkochen (DE)**

(72) Erfinder: **DERNDINGER, Eberhard**
**73434 Aalen (DE)**

(74) Vertreter: **Kraus & Lederer PartGmbB**
**Thomas-Wimmer-Ring 15**
**80539 München (DE)**

(56) Entgegenhaltungen:
**WO-A1-2009/108050**    **WO-A1-2011/139150**

• **DAVID J TOLHURST ET AL: "Amplitude spectra of natural images", OPHTHALMIC AND PHYSIOLOGICAL OPTICS, 1 April 1992 (1992-04-01), England, pages 229 - 232, XP055703839, Retrieved from the Internet <URL:https://onlinelibrary.wiley.com/doi/ pdfdirect/10.1111/j.1475-1313.1992.tb00296.x> [retrieved on 20200610], DOI: 10.1111/opo.12251**

**Beschreibung**

Die vorliegende Anmeldung betrifft Verfahren und Vorrichtungen zu Bildkorrektur sowie entsprechende Computerprogramme. Insbesondere betrifft die vorliegende Anmeldung derartige Verfahren und Vorrichtungen, welche zur Korrektur eines Einflusses von Luftschlieren und/oder zur Bildstabilisation, insbesondere auch für Videos, das heißt Bildsequenzen, verwendet werden können. Derartige Bildkorrekturen, bei denen Einflüsse von Störungen wie Luftschlieren kompensiert werden, werden auch als Bildrestauration bzw. Videorestauration bezeichnet.

Wenn optische Systeme, wie beispielsweise Fernrohre oder Kameras, in der Atmosphäre verwendet werden, können Störungen der optischen Abbildung des optischen Systems durch Luftschlieren auftreten. Luftschlieren können beispielsweise durch Sonneneinstrahlung verursacht werden, welche wiederum Luftturbulenzen verursacht. Solche optischen Systeme werden häufig mit Kameras oder Bildsensoren gekoppelt, um eine Bildaufnahme zu ermöglichen.

Derartige Luftschlieren können zu einem Flimmern, also zu einer Bewegung, in dem Bild und/oder zu Unschärfe in dem Bild, welches durch das optische System betrachtet werden kann oder über das optische System aufgenommen werden kann, führen.

Eine unerwünschte Bewegung in dem Bild kann ebenso entstehen, wenn das optische System während der Bildaufnahme unbeabsichtigt bewegt wird, beispielsweise durch Erschütterungen eines verwendeten Stativs. Bei Bildaufnahmeeinrichtungen, die scannend (abtastend) arbeiten, z.B. mit einem Zeilensensor, der ein Objekt zeilenweise aufnimmt, oder einem Sensor mit einem einzigen Bildpunkt, der ein aufzunehmendes Objekt abtastet, können durch eine Abtastbewegung zusätzliche Störungen auftreten. Ein Beispiel für einen Zeilensensor ist ein so genanntes Schlitz-Scan-Laserscanmikroskop (LSM), ein Beispiel für eine Aufnahme eines einzigen Bildpunktes verbunden mit einem Abtasten eines Objekts ist ein Elektronenmikroskop oder ein gewöhnliches Laserscanmikroskop. Derartige Bewegungen können translatorische und/oder rotatorische Komponenten aufweisen, d.h. es kann sowohl eine Verschiebung als auch eine Drehung auftreten.

Bildstörungen, die eine Bewegung verursachen, wie das oben erwähnte Flimmern oder unbeabsichtigte Bewegungen des optischen Systems sind insbesondere auch bei Videoaufnahmen störend, d.h. in dem Fall, in dem eine Vielzahl von aufeinanderfolgenden Bildern aufgenommen wird.

Bei digitaler Bildaufnahme mit einem Bildsensor, wie er heutzutage üblicherweise eingesetzt wird, besteht die Möglichkeit, aufgenommene Bilder durch nachträgliche rechnergestützte Bearbeitung zu verbessern. Um beispielsweise unerwünschte Bewegungen oder Flimmern nachträglich durch entsprechende Bildverarbeitung zu korrigieren, gibt es verschiedene Herangehensweisen. So wird bei manchen Herangehensweisen das Flimmern durch eine Registrierung von markanten Mustern wie beispielsweise markanten Kanten im Bild verringert. In anderen Worten werden in einer Abfolge von Bildern, beispielsweise einem Video, markante Kanten bestimmt, und die Bilder werden so korrigiert, dass die Muster in aufeinanderfolgenden Bildern zur Deckung gebracht werden. Diese Herangehensweise funktioniert gut, wenn in den Bildern entsprechende markante Muster, z.B. Kanten, vorhanden sind, zum Beispiel viele Häuser mit Fenstern auftreten. Bei Naturaufnahmen mit Büschen, Gras usw. wird es schwierig, weil markante Kanten oder andere geeignete Muster weniger oder nicht vorhanden sind. Wenn die Registrierung von markanten Mustern in einem derartigen Fall nicht funktioniert, kann dies auch negative Auswirkungen auf eine nachfolgende Schärfung der Bilder haben, wenn ein verwendeter Schärfungsalgorithmus auf mehrere aufeinanderfolgenden Bildern angewendet wird.

Eine weitere Herangehensweise ist das sogenannte "Speckle Imaging", welches beispielsweise in C.J. Carrano, "Speckle Imaging over Horizontal Paths", Lawrence Livermore National Laboratory, 8. Juli 2002 beschrieben ist. Weitere Informationen hierzu finden sich z.B. in G. Weigelt und B. Wirnitzer, OPTICS LETTERS Vol. 8, Nr. 7, 1983, S. 389ff oder Taylor W. Lawrence et al., OPTICAL ENGINEERING Vol. 31, Nr. 3, S. 627ff, 1992. Ein Hauptnachteil des Speckle Imaging ist, dass hierfür viel Rechenzeit oder entsprechend leistungsstarke Rechner benötigt werden. Das Speckle Imaging wurde ursprünglich hauptsächlich in der Astronomie genutzt, wo zumindest bei vielen Anwendungen ausreichend Zeit für die Bildnachbearbeitung und/oder entsprechende Rechnerkapazität zur Verfügung steht. Für terrestrische Aufnahmen, die häufig in Echtzeit erfolgen sollen, ist die Implementierung einer derartigen Herangehensweise auf Basis des Speckle Imaging zumindest sehr aufwändig, da speziell entworfene Hardware (beispielsweise ASICs, anwendungsspezifische integrierte Schaltkreise) benötigt werden, oder sogar unmöglich. Zudem werden bei dem Speckle Imaging-Algorithmus sich bewegende Objekte, zum Beispiel laufende Personen oder fahrende Kraftfahrzeuge, genauso wie Luftschlieren bearbeitet. Dies kann zu Artefakten führen, bei denen diese sich bewegenden Objekte typischerweise verschmiert werden oder teilweise sogar verschwinden.

Die WO 2009/108050 A1 offenbart ein Verfahren zur Bildbearbeitung, insbesondere zur Korrektur von Abbildungsfehlern, welche eine Abfolge von Bildern verwendet. Die Bilder werden in Teilbilder unterteilt und in den Ortsfrequenzraum transformiert. Eine Korrektur erfolgt dann auf Basis eines Arguments einer Exponentialfunktion. Die Teilbilder werden in den Ortsraum transformiert und wieder zusammengesetzt.

Ein weiteres Verfahren zur Bildbearbeitung ist aus der WO 2011/139150 A1 bekannt.

David J. Tolhurst et al, "Amplitude spectra of natural images", Ophthalmic and Physiological Optics, 1.

April 1992, Seiten 229-232, zeigt Amplitudenspektren von Bildern, bei welchen eine Amplitude zu höheren Frequenzen hin abfällt.

Daher ist es eine Aufgabe der vorliegenden Erfindung, Verfahren, Vorrichtungen und entsprechende Computerprogramme bereitzustellen, mit welchen derartige Bildkorrekturen mit geringerem Rechenaufwand implementierbar sind.

Hierzu wird ein Verfahren gemäß Anspruch 1, eine Vorrichtung gemäß Anspruch 12 sowie ein Computerprogramm nach Anspruch 15 bereitgestellt. Die Unteransprüche definieren vorteilhafte und bevorzugte Ausführungsformen.

Gemäß einem ersten Aspekt wird ein Verfahren zur Bildbearbeitung bereitgestellt, umfassend:

Bereitstellen einer Abfolge von Bildern,
Unterteilen der Bilder in Kacheln (d.h. eine oder mehrere Kacheln),
Transformieren der Kacheln in den Ortsfrequenzraum,
Identifizieren von Verschiebungen durch Auswertung des Arguments der Spektraldichtefunktion der Kacheln im Ortsfrequenzraum durch Bestimmen eines Faktors, um den sich das Argument der Spektraldichtefunktion von Bild zu Bild frequenzproportional ändert,
Kompensieren zumindest eines Teils der identifizierten Verschiebungen, z.B. durch Mittelung oder durch Modifizieren des Arguments der Spektraldichte,
Rücktransformieren der Kacheln in den Ortsraum, und
Zusammensetzen der rücktransformierten Kacheln.

Auf diese Weise kann mit vergleichsweise geringem Rechenaufwand eine unerwünschte Bewegung aus der Abfolge von Bildern herausgerechnet werden. Durch die Behandlung im Ortsfrequenzraum ist z.B. verglichen mit Verfahren, die im Ortsraum arbeiten, keine Registrierung an markanten Bildteilen wie z.B. Kanten und dergleichen nötig, sodass das Verfahren auch in Situationen robust arbeiten kann, in denen derartige markante Bildteile nicht oder kaum vorhanden sind. Zudem kann - bei Einhaltung des Abtasttheorems - die Kompensation von Bewegungen mit einer Genauigkeit unterhalb eines Bildpunktes (Pixel) durchgeführt werden, z.B. im Bereich 0,01 Bildpunkte. Dies ist mit Verfahren, die im Ortsraum arbeiten, häufig nicht möglich.

Das Verfahren kann weiter ein Mitteln über einander entsprechende Kacheln der Abfolge von Bildern (was einem Mitteln über die Zeit entspricht) vor dem Zusammensetzen umfassen.

Durch das Mitteln können restliche Verschiebungen noch herausgerechnet werden.

Das Verfahren kann weiter ein Schärfen über einander entsprechenden Kacheln der Abfolge von Bildern vor oder nach dem Zusammensetzen umfassen.

Eine Kachelgröße bei dem Unterteilen der Bilder in Kacheln kann in Abhängigkeit von der Größe von Luftschlieren bei der Bildaufnahme und/oder in Abhängigkeit von einer Stärke von Verwacklungen bei der Bildaufnahme festgelegt werden.

Das Unterteilen, das Transformieren, das Identifizieren, das Kompensieren und das Rücktransformieren kann N mal, N $\geq$ 1, wiederholt werden, wobei eine Größe der Kacheln beim Unterteilen schrittweise verkleinert werden kann.

Durch die schrittweise Verkleinerung können beispielsweise auch kleinere Luftturbulenzzellen berücksichtigt werden und schrittweise kleinere Verschiebungen herausgerechnet werden, was die Bildqualität weiter verbessert.

Bei unterschiedlichen Wiederholungen können unterschiedliche Bilder der Abfolge von Bildern in Abhängigkeit von einer Größe der Kacheln beim Transformieren, Identifizieren, Ausgleichen und/oder Rücktransformieren berücksichtigt werden.

Ein Faktor, um den die Kacheln verkleinert werden, kann sich zwischen mindestens zweien der Wiederholungen unterscheiden.

Hierdurch kann der Rechenaufwand weiter verringert werden, indem die herangezogenen Kacheln dynamisch an die Erfordernisse angepasst werden.

Die Bilder können Farbbilder sein. Dabei kann das Unterteilen, das Transformieren und das Rücktransformieren für jeden Farbkanal getrennt durchgeführt werden.

Das Identifizieren der Verschiebungen kann dann anhand von Grauwerten, welche z.B. durch Mittelung der Farbkanäle erhalten werden, durchgeführt werden, und das Ausgleichen für die Farbkanäle kann für jeden Farbkanal auf Basis des Ergebnisses des Identifizierens durchgeführt werden. Gleiches kann auch für andere Berechnungen zur Bildkorrektur gelten: Parameter für die Bildkorrektur können auf Basis von Grauwerten erhalten werden, und dann kann auf Basis der Parameter für jeden Farbkanal eine Bildkorrektur durchgeführt werden.

Auf diese Weise können auch farbige Bilder bearbeitet werden.

Das Identifizieren wird gemäß der Erfindung auf Basis von Frequenzen (im Ortsfrequenzraum) unterhalb eines Frequenzschwellenwertes, d.h. bei niederen Frequenzen angewendet. Dies erleichtert das Identifizieren, welches im Allgemeinen bei niederen Frequenzen einfacher ist, da bei niedrigeren Frequenzen im Allgemeinen der Betrag der Spektraldichte vergleichsweise hoch ist. Durch Bestimmung auf Basis niederer Frequenzen kann insbesondere die Bestimmung von Parametern der Verschiebung erleichtert werden.

Das Identifizieren kann ein Unterscheiden von Verschiebungen durch Störungen von Verschiebungen durch bewegte Objekte umfassen, wobei letztere beim Ausgleichen im Wesentlichen ausgenommen werden. Auf diese Weise können bewegte Objekte von der Bildbearbeitung ausgenommen werden und somit ohne Artefakte erhalten werden.

Ein oder mehrere Verfahrensschritte des oben beschriebenen Verfahrens können dynamisch in Abhängigkeit von den Kacheln und/oder einem Inhalt der Bilder angepasst werden. So ist eine flexible Herangehensweise je nach den Erfordernissen möglich.

Ein oder mehrere Verfahrensschritte des oben beschriebenen Verfahrens können parallelisiert durchgeführt werden, um die Geschwindigkeit zu erhöhen. Beispielsweise können die Transformation und/oder andere beschriebene Berechnungen , welche je nach Bildgröße relativ zeitaufwändig sein können, parallelisiert durchgeführt werden. Beispielsweise kann die Berechnung für jede Kachel oder auch für Gruppen von Kacheln in getrennten Recheneinrichtungen, z.B. getrennten Kerneln, erfolgen. Bei anderen Ausführungsformen kann die Transformation auch für verschiedene Zeilen und/oder Spalten des Bildes parallel durchgeführt werden.

Gemäß einem zweiten Aspekt wird eine Vorrichtung zur Bildbearbeitung bereitgestellt, umfassend: eine Recheneinrichtung mit mindestens einem Prozessor und einem Speicher, wobei in dem Speicher eine Abfolge von Bildern speicherbar ist, wobei der Prozessor eingerichtet ist, folgende Schritte durchzuführen:

Unterteilen der Bilder in eine oder mehrere Kacheln,
Transformieren der Kacheln in den Ortsfrequenzraum,
Identifizieren von Verschiebungen durch Auswertung des Arguments der Spektraldichtefunktion der Kacheln im Ortsfrequenzraum durch Bestimmen eines Faktors, um den sich das Argument der Spektraldichtefunktion von Bild zu Bild frequenzproportional ändert,
Kompensieren zumindest eines Teils der identifizierten Verschiebungen, z.B. durch Modifizieren des Arguments der Spektraldichte oder durch Mittelung,
Rücktransformieren der Kacheln in den Ortsraum, und Zusammensetzen der rücktransformierten Kacheln.

Das Identifizieren erfolgt dabei auf Basis von Frequenzen unterhalb eines Frequenzschwellenwertes.

Die Vorrichtung kann zur Durchführung der oben beschriebenen Verfahren eingerichtet sein. Die Vorrichtung kann weiter ein optisches System und eine mit dem optischen System gekoppelte Kameraeinrichtung zum Aufnehmen der Abfolge von Bildern umfassen. Die Kameraeinrichtung kann beispielsweise einen 2d-Bildsensor, bei dem n x m Bildpunkte, n,m jeweils >1, gleichzeitig aufgenommen werden, aufweisen. Sie kann aber auch einen 1d-Bildsensor (Zeilensensor) oder einen 0d-Bildsensor (einen einzelnen Bildpunkt) aufweisen und scannend arbeiten, um z.B. ein gewünschtes Objekt aufzunehmen.

Gemäß einem dritten Aspekt wird ein Computerprogramm mit einem Programmcode bereitgestellt, das, wenn es auf einer Recheneinrichtung ausgeführt wird, das Verfahren wie oben beschrieben durchführt. Das Computerprogramm kann beispielsweise auf einem Datenträger oder in einem Speicher vorliegen oder über ein Netzwerk bereitgestellt werden. Die Erfindung wird nachfolgend anhand von Ausführungsformen unter Bezugnahme auf die beigefügten Zeichnungen näher erläutert. Es zeigen:

Figur 1 eine schematische Darstellung einer Vorrichtung gemäß einem Ausführungsbeispiel,

Figur 2 ein Flussdiagramm zu Veranschaulichung eines Verfahrens gemäß einem Ausführungsbeispiel, und

Figuren 3 und 4 Diagramme zur Veranschaulichung mancher Schritte des Ausführungsbeispiels der Figur 2.

Im Folgenden werden verschiedene Ausführungsbeispiele detailliert erläutert. Es ist zu bemerken, dass diese Ausführungsbeispiele lediglich der Veranschaulichung dienen und nicht als einschränkend auszulegen sind. Beispielsweise werden Ausführungsbeispiele mit einer Vielzahl von Elementen oder Komponenten dargestellt. Dies ist nicht dahingehend auszulegen, dass alle diese Elemente oder Komponenten für die Implementierung von Ausführungsbeispielen unerlässlich sind. Vielmehr können andere Ausführungsbeispiele auch weniger als die dargestellten oder beschriebenen Elemente oder Komponenten und/oder alternative Elemente oder Komponenten aufweisen. Bei wieder anderen Ausführungsbeispielen können zusätzliche Elemente oder Komponenten bereitgestellt sein, beispielsweise in herkömmlichen optischen Systemen oder Recheneinrichtungen verwendete Elemente. Komponenten oder Elemente verschiedener Ausführungsbeispiele können miteinander kombiniert werden, sofern nichts anderes angegeben ist. Variationen und Abwandlungen, welche für eines der Ausführungsbeispiele beschrieben werden, können auch auf andere Ausführungsbeispiele angewendet werden.

Die vorliegende Erfindung befasst sich mit Bildkorrekturen. Unter einem Bild im Rahmen der vorliegenden Anmeldung wird ein Einzelbild oder ein Bild eines Videos, welches sich aus einer Vielzahl von aufeinanderfolgenden Bildern zusammensetzt, verstanden. Im Falle von Videos wird ein derartiges Bild auch als Frame bezeichnet. Eine Abfolge von Bildern bezeichnet im Rahmen dieser Anmeldung eine Folge von hintereinander aufgenommenen Bildern. Eine derartige Abfolge von aufeinanderfolgenden Bildern kann beispielsweise als Video aufgenommen oder wiedergegeben werden, oder als Folge kurz hintereinander aufgenommener Einzelbilder.

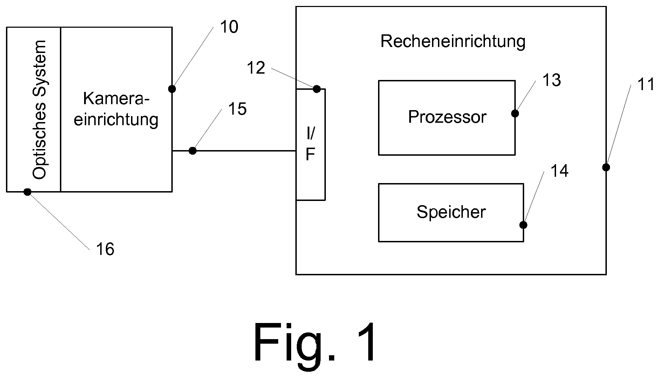

Figur 1 zeigt eine Vorrichtung gemäß einem Ausführungsbeispiel. Die Vorrichtung der Figur 1 umfasst eine mit einem optischen System 16 gekoppelte Kameraeinrichtung 10. Das optische System 16 kann beispielsweise ein Fernrohr, ein Teleskop oder ein Mikroskop sein, mit dem die Kameraeinrichtung 10 gekoppelt ist. Das optische System 16 kann bei einem anderen Ausführungsbeispiel auch einfach ein Kameraobjektiv der Kameraeinrichtung 10 sein. Über das optische System 16 werden ein oder mehrere aufzunehmende Objekte auf einen Bildsensor der Kameraeinrichtung 10 abgebildet, beispielsweise einen CCD-Sensor (Charge Coupled Device) oder einen CMOS-Sensor (Complimentary Metal Oxide Semiconductor). Wie bereits eingangs erläutert kann die Kameraeinrichtung einen 2d-Bildsensor umfassen. Mittels Abtastung können Bilder aber auch zeilenweise mit einem 1d-Bildsensor oder Punktweise (0d-Bildsensor) aufgenommen werden. Die Begriffe Kameraeinrichtung und Bildsensor sind hier breit zu verstehen und beziehen sich auf jede Art von Einrichtung, mit der Bilder von einem oder mehreren Objekten aufgenommen werden können, und umfassen beispielsweise auch Elektronenmikroskope und Laserscanmikroskope (LSM). Die Kameraeinrichtung 10 kann somit über das optische System 16 eine Abfolge digitaler Bilder aufnehmen. Die Vorrichtung der Figur 1 umfasst weiter eine Recheneinrichtung 11, welche beispielsweise einen oder mehrere Prozessoren 13 und zugeordneten Speicher 14, beispielsweise nichtflüchtigen Speicher (z.B. Flash-Speicher), Speicher mit wahlfreiem Zugriff (RAM) oder Nur-Lesespeicher (ROM) aufweisen kann. In dem Speicher 14 kann insbesondere ein Programmcode gespeichert sein, welcher die Ausführung der nachfolgend näher beschriebenen Bildkorrekturen ermöglicht, wenn der Programmcode in der Recheneinrichtung 11 auf dem Prozessor 13 ausgeführt wird. Der Programmcode kann der Recheneinrichtung 11 beispielsweise über einen Datenträger (Speicherkarte, CD- oder DVD-Datenträger etc.) oder über ein Netzwerk zugeführt werden.

Um die Bilder, welche von der Kameraeinrichtung 10 empfangen wurden, bearbeiten zu können, kann die Recheneinrichtung 11 die Bilder mittels einer Schnittstelle 12 über eine Verbindung 15 empfangen. Diese kann beispielsweise direkt über eine drahtgebundene oder drahtlose Verbindung erfolgen, z.B. wenn die Kameraeinrichtung 10 und die Recheneinrichtung 11 räumlich zusammenhängend, beispielsweise in einem Mikroskopsystem, angeordnet sind. Es ist jedoch durchaus auch möglich, dass beispielsweise in der Kameraeinrichtung 10 die Bilder auf eine Speicherkarte oder andere Speichermedien geschrieben werden und dann von diesem Speichermedium auf die Recheneinrichtung 11 übertragen werden. Auch eine Übertragung über Rechnernetze, beispielsweise das Internet, gegebenenfalls auch mit einer oder mehreren Zwischenstationen, ist möglich. Die Verarbeitung der Bilder in der Recheneinrichtung kann zeitnah unmittelbar nach der Aufnahme der Bilder, insbesondere auch in Echtzeit, aber auch zeitlich getrennt erfolgen. Bei anderen Ausführungsbeispielen kann die Recheneinrichtung 11 in der Kameraeinrichtung 10 integriert sein, beispielsweise innerhalb einer Videokamera. Somit impliziert die Darstellung der Figur 1 keine besondere räumliche Beziehung zwischen der Kameraeinrichtung 10 mit dem optischen System 16 einerseits und der Recheneinrichtung 11 andererseits.

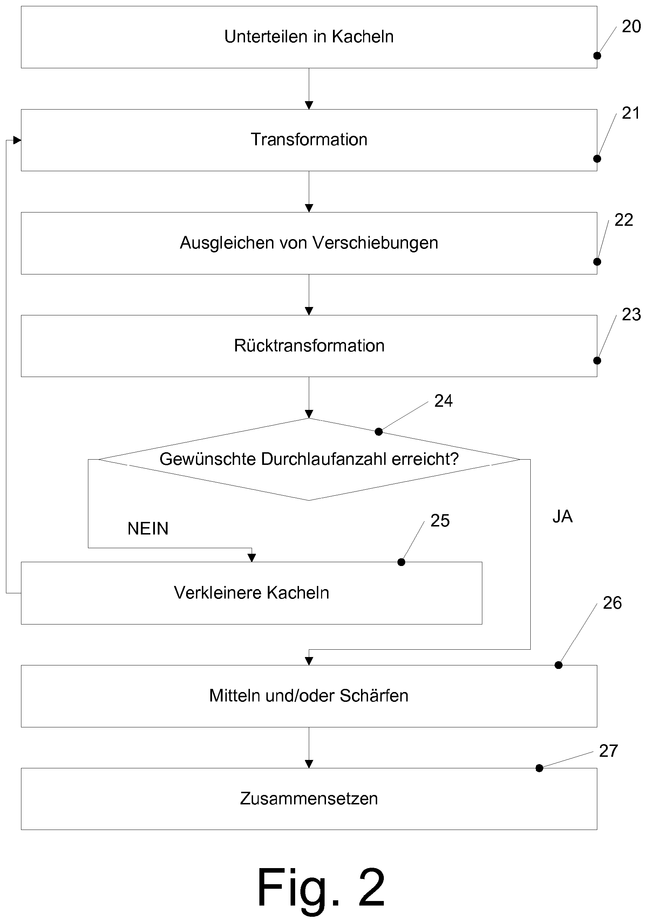

Die Recheneinrichtung kann mit einer aufgenommenen Abfolge von Bildern insbesondere eine Reihe von Verarbeitungsschritten durchführen, welche nachfolgend unter Bezugnahme auf die Figur 2 näher werden. Diese Schritte können wie bereits erläutert mittels einer entsprechenden Programmierung des Prozessors 13 implementiert sein. Der Prozessor 13 kann dabei ein universell verwendbarer Prozessor wie eine CPU sein, aber beispielsweise auch ein spezieller Grafikprozessor oder anderer Prozessor oder eine Kombination hiervon sein. Spezielle Grafikprozessoren werden beispielsweise häufig innerhalb von Kameras eingesetzt, während zur Bildbearbeitung beispielsweise auf einem Computer häufig allgemeine Prozessoren zum Einsatz kommen. Die Implementierung der vorliegenden Erfindung ist in dieser Hinsicht nicht auf irgendeine besondere Anordnung begrenzt. Grundsätzlich ist es auch ebenso möglich, die nachfolgend beschriebene Bildbearbeitung mittels spezieller Hardware-Bausteine, beispielsweise anwenderspezifischen integrierten Schaltkreisen (ASICs) oder feldprogrammierbaren Gatteranordnungen (FPGA, vom englischen Field Programmable Gate Array) zu implementieren.

Figur 2 zeigt ein Flussdiagramm eines Verfahrens gemäß einem Ausführungsbeispiel, welches beispielsweise wie oben erläutert in der in Figur 1 diskutierten Vorrichtung, insbesondere der Recheneinrichtung 11, implementiert sein kann. Zunächst wird ein Überblick über das Verfahren gegeben. Dann werden die verschiedenen Verfahrensschritte detailliert erläutert. Zuletzt werden verschiedene Variationen, Abwandlungen und Anwendungsmöglichkeiten des Verfahrens diskutiert.

Zur Durchführung des Verfahrens wird eine Abfolge von Bildern herangezogen. Um beispielsweise ein bestimmtes Bild der Abfolge von Bildern zu bearbeiten, wird eine gewisse Anzahl von Nachbarbildern herangezogen, zum Beispiel 15 Bilder vor und 15 Bilder nach dem bestimmten Bild. Das bestimmte Bild kann auch als zu restaurierendes Bild bezeichnet werden. In diesem Beispiel würde also zur Restaurierung eines bestimmten Bildes ein Block von 31 insbesondere aufeinanderfolgend aufgenommenen Bildern herangezogen werden. Die Anzahl von 15 Bildern vor und nach dem zu restaurierenden Bild dient hier aber nur als Beispiel, und es kann auch eine beliebige andere Anzahl verwendet werden, je nach zur Verfügung stehenden Bildern und zur Verfügung stehender Rechenleistung. Die Anzahl von herangezogenen Bildern vor und nach dem zu restaurierenden Bild muss dabei nicht gleich sein. Die Bilder werden bevorzugt kurz hintereinander mit kürzerer zeitlicher Apertur aufgenommen.

In der Abfolge von Bildern können über der Zeit, d.h. von Bild zu Bild, verschiedene Ereignisse zur Änderung des Bildinhalts führen. Manche dieser Ereignisse sind dabei unerwünscht und können durch das erfindungsgemäße Verfahren korrigiert werden.

So kann die Kameraeinrichtung eine translatorische und/oder rotatorische Bewegung durchführen, welche im Falle von Erschütterungen und dergleichen unerwünscht ist. Diese Bewegung führt zu einer entsprechenden Bewegung des Bildinhalts. Auch kann sich ein gesamtes aufgenommenes Objekt bewegen. Des Weiteren kann durch Luftschlierenstörungen wie bereits erläutert ein Flimmern erzeugt werden. Schließlich können sich auch nur Teile des aufgenommenen Bildes bewegen, beispielsweise wenn ein bewegliches Objekt wie ein Automobil oder ein Lastkraftwagen aufgenommen wird.

Das Verfahren der Figur 2, wie es zunächst erläutert werden wird, eignet sich insbesondere für Schwarz-Weiß- bzw. Graustufen-Bilder. Eine Übertragung auf Farbbilder wird später näher erläutert.

In Schritt 20 der Figur 2 werden die Bilder der Abfolge von Bildern in Kacheln, d.h., in Teilbereiche unterteilt. In Schritt 21 erfolgt eine Transformation in den Frequenzbereich, beispielsweise durch eine Fourier-Transformation.

In Schritt 22 werden im Ortsfrequenzraum Verschiebungen von Bildteilen, welche sich beispielsweise durch Luftschlieren ergeben haben, identifiziert und ausgeglichen bzw. herausgerechnet. In Schritt 23 erfolgt dann eine Rücktransformation, beispielsweise durch eine inverse Fourier-Transformation.

In Schritt 24 wird geprüft, ob eine gewünschte Durchlaufzahl an Berechnungen erreicht ist. Falls nein, werden in Schritt 25 verkleinerte Kacheln verwendet (beispielsweise wird die Kachelgröße halbiert), und die Schritte 21 bis 23 werden mit den verkleinerten Kacheln erneut durchlaufen. Falls ja, wird in Schritt 26 ein Mitteln über die Abfolge von Bildern für jede Kachel durchgeführt, beispielsweise um verbleibende Verschiebungen von Bild zu Bild herauszumitteln, und/ oder es wird ein Schärfen der Bilder durchgeführt. In Schritt 27 werden die Kacheln dann zu einem fertigen, korrigierten Bild zusammengesetzt, welches dann weiter verarbeitet oder betrachtet werden kann.

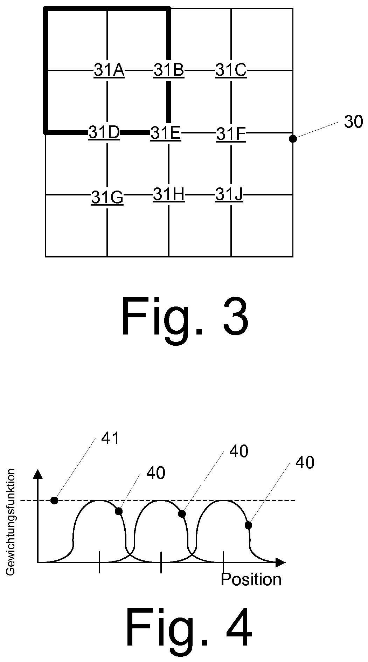

Nunmehr werden die einzelnen Schritte des Verfahrens der Figur 2 noch näher erläutert. Zunächst wird das Unterteilen in Kacheln aus Schritt 20 unter Bezugnahme auf die Figuren 3 und 4 erklärt. Bevorzugt weisen dabei die Kacheln eine oder mehrere der folgenden Eigenschaften auf:

- Die Größe der Kacheln sollte möglichst kleiner als die größten Bereich von Störungen in dem Bild sein, im Falle der Kompensation von Luftschlieren beispielsweise kleiner als die größten Zellen von Luftschlieren.

- Verschiebungen des Bildes durch Verwackeln und dergleichen, beispielsweise instabile Stativhalterungen eines Fernrohrs, sollten deutlich kleiner als die Größe der Kacheln, beispielsweise höchstens die Hälfte, höchstens ein Drittel oder höchstens ein Viertel, der Kachelgröße sein.

- Die Kacheln sollten am Ende des Verfahrens in einfacher Weise wieder zusammengefügt werden können.

Eine Kachelgröße für Schritt 20 kann beispielsweise eine Kantenlänge im Bereich von einem Viertel oder einem Achtel der Bildgröße sein. Die Kacheln können quadratisch sein. Bei einem typischen Bild mit 2048 x 1024 Pixeln (Bildpunkten) kann beispielsweise eine Kachelgröße von 256 x 256 Pixeln gewählt werden, wobei auch andere Größen möglich sind. Bevorzugt überlappen sich die Kacheln dabei so, dass jedes Pixel, das nicht im Randbereich liegt, in vier Kacheln vorhanden ist. Zur Veranschaulichung zeigt Fig. 3 eine derartige Aufteilung. Bei dem Beispiel der Fig. 3 wird ein Bild 30 in neun Kacheln (3 x 3) 31A-31J aufgeteilt. Jede Kachel umfasst vier der kleinen Quadrate, wobei das Bezugszeichen jeweils in der Mitte steht. Um dies zu verdeutlichen, ist die Kachel 31A in Fig. 3 fett umrandet dargestellt.

Wie zu sehen ist, gehören bei dieser Aufteilung nur die Pixel in den Ecken nur zu einer Kachel, sonstige Randpixel gehören jeweils zu zwei Kacheln, und Pixel in den mittleren kleinen Quadraten gehören zu jeweils vier Kacheln. Die Figur 3 dient dabei lediglich der Veranschaulichung, und je nach Bildgröße kann die Anzahl von Kacheln auch anders, insbesondere größer sein, beispielsweise wie bei dem obigen Pixelbeispiel.

Bevorzugt werden die Kacheln mit einer Gewichtungsfunktion multipliziert. Hierdurch können Artefakte bei der in Schritt 21 folgenden Transformation unterdrückt werden. Verschiedene geeignete Fensterfunktionen für diese Gewichtung sind für sich genommen bekannt. Die Gewichtung in zwei Dimensionen für den Fall der Fig. 3 ist schematisch in Fig. 4 dargestellt. Dabei werden die drei Kacheln in jeder Richtung jeweils mit einer Gewichtungsfunktion 40 multipliziert, welche zum Rand der Kachel in abfällt. In den überlappenden Bereichen verhalten sich die Gewichtungsfunktionen bevorzugt so, dass die überlappenden Gewichtungsfunktionen in der Summe konstant sind, z.B. 1 ergeben (durch eine Linie 41 angedeutet), sodass später die Kacheln durch einfaches Aufaddieren wieder zu einem Gesamtbild vereinigt werden können. Eine geeignete Fensterfunktion ist dabei die Hanning-Fensterfunktion, wobei auch andere Fensterfunktionen verwendet werden können.

Die Zerlegung in Kacheln wird auf jedes Bild der Abfolge von Bildern (beispielsweise die 31 Bilder in dem obigen Zahlenbeispiel) angewendet.

Zu bemerken ist, dass, wenn die zu kompensierende Bewegung in dem gesamten Bild gleich ist oder im gesamten Bild auftritt, auch nur eine einzige Kachel verwendet werden kann, d.h. diese einzige Kachel umfasst dann das gesamte Bild.

In Schritt 21 wird dann auf jede der Kacheln eine Transformation vom Ortsbereich in den Ortsfrequenzbereich durchgeführt, wobei diese Transformation eine zweidimensionale Transformation entsprechend dem zweidimensionalen Bild ist. Bei einem bevorzugten Ausführungsbeispiel wird eine Fourier-Transformation, insbesondere eine schnelle Fourier-Transformation (FFT, vom englischen fast Fourier transform) verwendet. Es können aber auch andere Arten der Transformation verwendet werden, beispielsweise andere Spektraltransformationen, an welchen dann die genaue Berechnung im nachfolgenden Schritt 22 durchgeführt wird. Beispielsweise kann eine Wavelet-Transformation verwendet werden. Jedes Bild im Ortsraum entspricht dann im Ortsfrequenzraum einer entsprechenden Spektraldichte.

Diese Transformation und/oder nachfolgend beschriebene Berechnungen , welche je nach Bildgröße relativ zeitaufwändig sein kann, können bei manchen Ausführungsformen parallelisiert durchgeführt werden. Beispielsweise kann die Berechnung für jede Kachel oder auch für Gruppen von Kacheln in getrennten Recheneinrichtungen, z.B. getrennten Kerneln, erfolgen. Bei anderen Ausführungsformen kann die Transformation auch für verschiedene Zeilen und/oder Spalten des Bildes parallel durchgeführt werden. So wird beispielsweise eine schnelle 2d-Fouriertransformation (FFT, vom englischen "Fast Fourier Transform") in zwei Abschnitten durchgeführt, z.B. zunächst in einer ersten Richtung (x-Richtung, zeilenweise) und dann in einer zweiten Richtung (y-Richtung, spaltenweise). In jedem dieser beiden Abschnitte kann eine solche FFT für die verschiedenen Zeilen bzw. Spalten in unterschiedlichen Kerneln oder anderweitig mit unterschiedlichen Recheneinrichtungen durchgeführt werden, z.B. bei 1024 Zeilen in 1024 Kerneln.

In Schritt 22 werden dann Verschiebungen in den Bildern, d.h. Verschiebungen einer Objektposition von Bild zu Bild, welche beispielsweise durch Verwackeln oder durch Luftschlieren verursacht werden können, identifiziert und herausgerechnet. Das Auftreten von Luftschlieren oder ein Verwackeln des optischen Systems führt insbesondere in jeder der betroffenen Kacheln zu einer Verschiebung gemäß dem Verschiebungssatz des Bildinhalts von Bild zu Bild. Hierfür ist es wie oben bei der Kachelbildung erläutert vorteilhaft, wenn die Kachelgröße kleiner als die entsprechenden Zellen von Luftschlieren ist. Im Frequenzbereich, in dem die Kacheln nach der Transformation des Schrittes 21 vorliegen, zeigt sich diese Verschiebung gemäß dem Verschiebungssatz als frequenzproportionale Änderung des Arguments der Spektraldichte.

Der Verschiebungssatz für eine Verschiebung um $x_0$ lautet in einer Dimension:

$$u(x-x_0) \quad \circ\!\!-\!\!\bullet \quad \exp(-i2\pi x_0 f)\, U(f)$$

wobei $\mathcal{F}$ die Spektraltransformation (zum Beispiel Fouriertransformation) darstellt, $u(x)$ das Bild im Ortsraum beschreibt und $U(f)$ die entsprechende Transformierte des Bildes, d.h. die Spektraldichte, im Ortsfrequenzraum beschreibt. $\exp(.)$ ist die Exponentialfunktion. Wie zu sehen ist, entspricht die Verschiebung im Ortsraum um $x_0$ einer Änderung des Arguments der Spektraldichte im Ortsfrequenzraum. Die Änderung des Arguments der Spektraldichte ist dabei für eine Verschiebung $x_0$ proportional zur Frequenz $f$. Für den Fall von zweidimensionalen Bildern bzw. zweidimensionaler Kachel gilt entsprechendes in zwei Dimensionen.

Die oben unter Bezugnahme auf die Figur zwei erläuterten möglichen Änderungen innerhalb der Abfolge von Bildern über der Zeit können durch entsprechende Änderungen der Spektraldichte, insbesondere des Arguments der Spektraldichte, detektiert werden.

So führt eine translatorische Bewegung der Kameraeinrichtung (beispielsweise Erschütterungen oder dergleichen) oder eine Bewegung des gesamten aufgenommenen Objekts über der Zeit zu einer Veränderung des Arguments der Spektraldichte von Bild zu Bild über der Zeit, wobei diese Änderung wie oben erläutert proportional zur Frequenz ist. Der Faktor, um den sich das Argument der Spektraldichte frequenzproportional ändert, das heißt beispielsweise $x_0$ in der obigen Gleichung, kann besonders einfach und robust bei niedrigen Ortsfrequenzen f ermittelt werden.

Ein Flimmern durch Luftschlierenstörungen kann sich je nach Kachelgröße auf verschiedene Weise zeigen. Bei relativ großen Kacheln verglichen mit der Größe störender Luftzellen äußert sich Flimmern in stationären Fluktuationen der Spektraldichte über der Zeit. In diesem Fall kann später zur Kompensation abhängig von der Auslegung der entsprechenden Vorrichtung und den dynamischen Verhältnissen in den aufgenommenen Bildern bei jeder Ortsfrequenzen ein über der Zeit gemittelte Wert, beispielsweise ein über die Bildfolge oder einen Teil hiervon arithmetisch gemittelter Wert der Spektraldichte oder auch ein gemitteltes Argument der Spektraldichte und ein gemittelter Betrag der Spektraldichte verwendet werden. Dieser Mittelwert wird dann in dem korrigierten Bild eingesetzt. Dabei hat sich herausgestellt, dass insbesondere die Verwendung eines gemittelten Betrages gute Ergebnisse liefert, auch wenn eine arithmetische Mittelung der gesamten Spektraldichte vermutlich mathematisch korrekter ist.

Bei bezogen auf die Luftzellengröße kleinen Kacheln zeigt sich Flimmern in stationärem Verschieben gemäß dem oben dargelegten Verschiebungssatz über der Zeit. Zum Korrigieren werden jedoch wie oben erläutert bevorzugt Kacheln verwendet, welche verglichen mit der Luftzellengröße groß sind.

Auch bei Bewegung eines Objektteils, beispielsweise der Bewegung eines Automobils oder Lastkraftwagens in dem Bild, muss nach kleinen und größeren Kacheln unterschieden werden. Bei kleinen Kacheln, die vollständig auf dem sich bewegenden Teil des Bildes liegen, äußert sich die Bewegung in einem Faktor mit einem frequenzproportionalen Argument entsprechend dem Verschiebungssatz, wobei sich das frequenzproportionale Argument, insbesondere $x_0$, über der Zeit linear ändert.

Bei Kacheln, die nur teilweise auf dem sich bewegenden Objekt liegen, ist die Situation komplexer. Derartige Kacheln eignen sich daher weniger gut für die Detektion sich bewegender Bildteile.

Die verschiedenen Änderungen des Bildes, welche oben diskutiert wurden, insbesondere auch Störungen durch Bewegung der Kameraeinrichtung oder Flimmern, welches durch Luftschlieren verursacht wird, äußern sich zumindest unter anderem in einer frequenzproportionalen Änderung des Arguments der Spektraldichte. Die Verschiebung $x_0$ geht dabei als Proportionalitätsfaktor ein, wie aus der obigen Formel für den Verschiebungssatz ersichtlich.

Um $x_0$ oder andere Parameter, welche die frequenzproportionale Änderung durch Verschiebung beschreiben, zu bestimmen, kann über eine Mittelung die Spektraldichte, welche einer bestimmten Anzahl von Bildern zugeordnet sind, ein mittlerer Wert der Spektraldichte bestimmt werden. Die oben genannten Parameter, die die oben genannten frequenzproportionalen Änderungen durch Verschiebungen beschreiben, lassen sich dann für jede Kachel relativ einfach bei niederen Frequenzen bezogen auf den mittleren Wert bestimmen. Die so bei niederen Frequenzen bestimmten Parameter gelten zumindest näherungsweise auch für höhere Frequenzen und können somit für alle Frequenzen verwendet werden.

Die Bestimmung der Parameter, insbesondere von $x_0$, bei niedrigen Frequenzen ist deswegen vergleichsweise einfach, weil die Beträge der Spektraldichte bei niedrigen Ortsfrequenzen vergleichsweise hoch sind. Daher lässt sich hier relativ robust beispielsweise die Verschiebung $x_0$ bestimmen. Dabei ist zudem zu berücksichtigen, dass bei üblichen Videoaufnahmen das Shannon Abtasttheorem verletzt ist. Dies führt zumindest bei hohen Ortsfrequenzen und gegebenenfalls auch schon bei mittleren Ortsfrequenzen zu Fehlern. Ist der Wert $x_0$ einmal für eine Kachel oder ein Bild bestimmt, dann ist dieser Wert auch für die Spektraldichte bei höheren Ortsfrequenzen gültig und kann zudem auch als Verschiebung im Ortsbereich herangezogen werden.

Basierend auf den so bestimmten Parametern wird für jede Kachel aus der Spektraldichte im Ortsfrequenzraum der verschiebungsbedingte, frequenzproportionale Anteil bezogen auf den mittleren Wert herausgerechnet, was im Wesentlichen einer Kompensation oder einem Ausgleichen der Verschiebung entspricht.

Dabei kann insbesondere durch Vergleich der Parameter für örtlich und/oder zeitlich benachbarte Kacheln erkannt werden, welche Bildstörungen (Flimmern, Verwackeln etc.) gegebenenfalls vorliegen, und derartige Störungen können korrigiert werden. Für spätere Berechnungen kann dieser verschiebungsbedingte frequenzproportionale Anteil zudem abgespeichert werden, um ihn später noch verwenden zu können. Nach dieser Berechnung verschiebt sich der Bildinhalt jeder Kachel nicht mehr von Bild zu Bild. Der Betrag der Spektraldichte bleibt dabei unverändert, da sich die Änderung wie oben erläutert im Argument widerspiegelt. Bei einem anderen Ausführungsbeispiel kann der Betrag der Spektraldichte in Schritt 22 über alle Bilder der Abfolge von Bildern gemittelt werden, um Rauschen zu reduzieren und Störungen wie durch Luftschlieren verursachtes Flimmern zu unterdrücken. Jedenfalls liegt nach dem Schritt 22 im Spektralbereich eine zumindest verringerte, wenn nicht beseitigte Verschiebung von Bild zu Bild mehr vor.

Nunmehr werden verschiedene Beispiele für die Bildkorrektur, insbesondere Kompensation von Verschiebungen, erläutert.

Bei manchen Ausführungsbeispielen reicht bereits ein Mitteln über der Zeit, zum Beispiel durch Mitteln von Argument und Betrag separat, bei relativ großen Kacheln aus, um translatorische Bewegungen der Kameraeinrichtung und/oder des gesamten aufgenommenen Bildes und/oder ein Flimmern durch Luftschlierenstörungen zu kompensieren.

Wenn beispielsweise wie oben erwähnt nur eine einzige Kachel verwendet wird, kann eine solche getrennte Mittelung von Argument und Betrag bei jeder gewünschten Frequenz im Ortsfrequenzraum durchgeführt werden. Bei anderen Ausführungsbeispielen kann ein Ebenen-Fit bezüglich der Änderung des Arguments gemäß dem Verschiebungssatz von Bild zu Bild im Ortsfrequenzraum durchgeführt werden, um die störende Bewegung zu kompensieren und ggfs. eine zu separierende Bewegung (d.h. eine Bewegung, die tatsächlich vorliegt, z.B. durch Bewegung eines aufgenommenen Objekts) zu bestimmen. Dies kann insbesondere bei 2d-Bildsensoren eingesetzt werden. Eine zu separierende Bewegung kann beispielsweise vorliegen, wenn von einem Flugzeug aus Videoaufnahmen gemacht werden. Die zu separierende Bewegung wird dann durch die Bewegung des Flugzeugs verursacht. Ähnliches gilt bei anderen Fahrzeugen. Auch bei anderen Anwendungen, z.B. bei einem Operationsmikroskop, kann eine solche Bewegung auftreten, z.B. zum einer Bewegung eines Operateurs mit seinen Instrumenten von einer Bewegung eines Mikroskopkopfs über dem ruhenden Patienten (welche z.B. kompensiert werden soll).

Tritt eine Bewegung nur mancher Bildteile auf, werden bevorzugt mehrere Kacheln verwendet. So können Bildteile mit sich bewegenden Objekten anders behandelt werden als Bildteile ohne solche Objekte. Dabei kann eine Bewegung von Objekten möglichst gut erhalten werden, während unerwünschte Bewegungen kompensiert werden. Die Anzahl und Größe der Kacheln kann dabei dynamisch angepasst werden, indem z.B. mit Mustererkennungsverfahren erkannt wird, wo und in welchen Kacheln sich bewegende Objekte auftreten.

Um auch eine Bewegung eines Teils des aufgenommenen Bildes (beispielsweise eines Automobils oder eines Lastkraftwagens) zu berücksichtigen, können bei manchen Ausführungsbeispielen Kacheln, in denen so ein derartiges Geschehen erkannt wurde, beispielsweise anhand einer relativ großen Bewegung in dem jeweiligen Bildteil, unverändert (unrestauriert) gelassen werden. Um derartige Effekte noch genauer zu berücksichtigen, können auch im Verhältnis zur Größe von Luftturbulenzen kleine Kacheln verwendet werden. Dabei werden örtlich und zeitlich benachbarte Kacheln herangezogen, um Bewegungen von nur Teilen des Bildes zu erkennen und anschließend gegebenenfalls eine Kompensation durchzuführen.

Falls so erkannt wird, dass in einer Kachel nur ein Flimmern durch Luftschlieren auftritt, kann dieses wie oben beschrieben kompensiert werden, d.h. durch Mittelung und/oder durch Bestimmung und Herausrechnen der jeweiligen Verschiebung.

Falls erkannt wird, dass in einer Kacheln ein Flimmern vorliegt und zudem ein sich bewegendes Objekt vollständig in der Kachel vorhanden ist, kann durch die die Betrachtung der Abhängigkeit über der Zeit beides voneinander getrennt werden, da Flimmern Fluktuationen hervorruft, während beispielsweise bei einer Bewegung die Verschiebung linear wächst. Durch diese Trennung kann dann nur die durch Flimmern hervorgerufene Fluktuation über der Zeit korrigiert werden.

Falls erkannt wird, dass in einer Kachel außer Flimmern ein sich bewegendes Objekt nur teilweise im Bereich der jeweiligen Kachel vorhanden ist, kann durch Analyse von benachbarten Kacheln ermittelt werden, wie dort die Verschiebung über der Zeit durch Flimmern ist. Diese Verschiebung kann dann für die aktuelle Kachel interpoliert werden und anschließend zur Kompensation herangezogen werden. Beispielsweise kann die Verschiebung aus benachbarten Kacheln gemittelt werden. Kompensiert wird wieder auf Basis des Verschiebungssatzes mit einem frequenzproportionalen Faktor.

In Schritt 23 erfolgt dann eine der Transformation des Schrittes 21 entsprechende Rücktransformation. War die Transformation in Schritt 21 beispielsweise eine Fourier-Transformation, insbesondere eine schnelle Fourier-Transformation, erfolgt in Schritt 23 eine inverse Fourier-Transformation, insbesondere eine schnelle inverse Fourier-Transformation (IFFT, vom englischen "inverse fast Fourier transform").

Diese Schritte 20-23 können mit schrittweise kleineren Kacheln wiederholt werden, bis eine gewünschte Durchlaufanzahl erreicht ist. Ein einziger Durchlauf wie oben beschrieben kann beispielsweise ausreichen, um Verwacklungen beispielsweise durch Erschütterungen eines Stativs auszugleichen. Sollen feinere Korrekturen, insbesondere für kleinere Luftschlieren, erreicht werden, kann mehr als ein Durchlauf ausgeführt werden. Hierzu werden in Schritt 25 die Kacheln verkleinert. Beispielsweise kann die Seitenlänge der Kacheln halbiert werden. Dabei werden bevorzugt die oben dargestellten Regeln zur Kachelbildung (siehe Beschreibung des Schritts 20) berücksichtigt. Insbesondere müssen die Regeln sowohl bei den vorausgegangenen Durchläufen als auch beim momentanen Durchlauf eingehalten werden, da am Ende wieder ein gesamtes Bild zusammengesetzt werden soll.

Für das gerade angesprochene Beispiel der Halbierung der Seitenlänge bedeutet dies beispielsweise bei manchen Ausführungsbeispielen, dass die Multiplikation mit dem Hanning-Fenster wie unter Bezugnahme auf Fig. 4 erläutert an den Außenrändern der größeren Kacheln nicht und nur zur Mitte hin vorgenommen wird, da an den Außenrändern der größeren Kacheln ja schon bei einem vorangegangenem Schritt eine entsprechende Gewichtung durch Multiplikation mit dem Hanning-Fenster erfolgte. Dann werden die Schritte 21-23 mit den verkleinerten Kacheln wiederholt. Dieses Verkleinern der Kacheln kann je nach Rechenleistung mehrmals geschehen, sodass die Schritte 21-23 mit immer kleineren Kacheln durchgeführt werden. Bei der Verkleinerung der Kacheln werden bevorzugt folgende Punkte berücksichtigt:

- Wenn sich der Bildinhalt in einer Kachel zu weit verschiebt, beispielsweise mehr als etwa ein Viertel der Seitenlänge der Kachel, können Artefakte auftreten, da sich dann der Bildinhalt deutlich ändert und nicht nur eine vergleichsweise geringe Verschiebung stattfindet. Daher wird zunächst mit ausreichend großen Kacheln in Schritt 20 begonnen und dann schrittweise verkleinert, wobei in jedem Schritt entsprechend große Verschiebungen kompensiert werden, die dann in nachfolgenden Schritten nicht mehr vorhanden sind.

- Bei der oben erläuterten Berechnung des Schritts 22 wird innerhalb einer Kachel nur die translatorische Verschiebung des Bildinhalts für die Restauration erfasst, wobei wie oben erläutert der Verschiebungssatz genutzt wird. Ein Flimmern, welches von im Vergleich zur Kachelgröße kleineren Luftturbulenzzellen verursacht wird, bleibt unberücksichtigt. Um dieses zur berücksichtigen, muss ein weiterer Durchlauf mit entsprechend kleineren Kacheln durchgeführt werden. Dies liegt daran, dass eine phasenmodulierte Sinus/Cosinusfunktion im Ortsbereich eine Spektraldichte in Form einer Besselfunktion besitzt, also eine Spektraldichte, die außer einer Grundfrequenz ein breites Spektrum durch die Phasenmodulation aufweist. Dies bedeutet, dass sich ein beispielsweise durch Luftschlieren verursachtes Flimmern kleiner Zellen (d.h. klein im Vergleich zur Kachelgröße) in einer relativ komplexen Spektraldichte zeigt, welche schwierig zu behandeln ist. Durch die schrittweise Verkleinerung der Kacheln kann derartiges Flimmern wie oben für den Schritt 22 beschrieben auf relativ einfache Weise behandelt werden, wenn die Kachelgröße kleiner als ein Bereich des Flimmerns oder anderer Verschiebungen wird. Somit kann die Anzahl der Durchläufe und die durchgeführte Verkleinerung davon abhängig gemacht werden, wie viel Rechenzeit zur Verfügung steht und wie kleine Luftturbulenzzellen oder andere Effekte berücksichtigt werden sollen.

Die oben beschriebenen Ausführungsbeispiele können für verschiedene Anwendungen verwendet werden. Beispielsweise können mit Fernrohren oder anderen optischen Systemen aufgenommene Videos insbesondere bei terrestrischen Anwendungen, beispielsweise Naturaufnahmen, restauriert werden. Grundsätzlich ist jedoch auch eine Anwendung in der Astronomie möglich. Durch Anwendung der beschriebenen Verfahren kann bei manchen Ausführungsbeispielen die effektive Auflösung erhöht, z.B. verdoppelt, werden. Dies kann beispielsweise bei einem elektronischen Zoom verwendet werden, bei dem kleine Bildausschnitte vergrößert werden.

Zu beachten ist, dass bei der Verkleinerung der Kachelgröße von Ebene zu Ebene keine benachbarten Pixelwerte beispielsweise verschiedener Ebenen, d.h. von Durchlauf zu Durchlauf, addiert werden. Dies unterscheidet die dargestellte Herangehensweise von Pyramiden-Algorithmen, bei denen Pixelwerte von Bildern zusammengezählt oder gemittelt werden, um so gleichsam von Ebene zu Ebene der Pyramide hochzusteigen.

Bei manchen Ausführungsbeispielen kann die Verkleinerung der Größe der Kacheln in Schritt 25 von Durchlauf zu Durchlauf fest gewählt werden. Beispielsweise kann bei jedem Durchlauf des Schrittes 25 eine Halbierung der Kachelgröße durchgeführt werden. Bei anderen Ausführungsbeispielen können auch verschiedene Verkleinerungen verwendet werden. Beispielsweise kann ein Faktor, durch den die Seitenlängen der Kacheln geteilt werden, von Durchlauf zu Durchlauf variieren. Die Anzahl der Durchläufe und die Verkleinerung der Kachel kann dynamisch erfolgen, beispielsweise nach momentaner Flächengröße und Bewegungsamplitude von Verschiebungen, welche beispielsweise durch Luftschlieren verursacht werden. Beispielsweise kann die Größenanpassung auf Basis von im Schritt 22 bei vorhergehenden Bildfolgen festgestellten Verschiebungen, beispielsweise innerhalb der letzten Sekunde, erfolgen. Die Verkleinerung der Kacheln kann auch über das Bild variieren, d.h. es müssen nicht alle Kacheln gleich verkleinert werden.

Beispielsweise können Bildteile, in welchen dem optischen System nahe Objekte abgebildet werden, anders variieren als andere Bildteile, auf welche weiter entfernte Objekte oder Objekte über relativ warmen Objekten, was mehr Flimmern erzeugt, abgebildet werden. Bei weiter entfernten Objekten liegt ein stärkeres Flimmern vor als bei näheren Objekten. So kann zum Beispiel in einem Bildteil mit nahen Objekten die Kachelgröße schneller von Durchlauf zu Durchlauf verkleinert werden als in Bildteilen, in denen Luftschlieren eine größere Rolle spielen. Beispielsweise können in manchen Bildteilen auch manche Verkleinerungsschritte ausgelassen werden. Die genaue Anpassung kann von einer jeweiligen Anwendung abhängen.

Nachdem eine gewünschte Anzahl von Durchläufen erreicht ist, wird in Schritt 26 ein Mitteln und/oder Schärfen durchgeführt. Zum Mitteln wird das Argument der Spektraldichte jeder Kachel über eine gewisse Anzahl von Bildern, beispielsweise die erwähnte Abfolge von Bildern, gemittelt. Eine entsprechende Mittelung kann auch für den Betrag der Spektraldichte durchgeführt werden. Auf diese Weise können restliche, gegebenenfalls noch vorhandene Verschiebungen herausgemittelt werden. Anstelle von getrennter Mittelung von Argument und Betrag sind auch andere Herangehensweisen zur Mittelung möglich, zum Beispiel die Mittelung der komplexen Spektraldichtewerte im kartesischen, komplexen Koordinatensystem. Ähnlich dem Schritt 22 hat dieses Mitteln somit ein Ausgleichen von Verschiebungen, in diesem Fall verbleibender Verschiebungen, die durch die Schritte 22 in den Durchläufen nicht ausgeglichen werden, zum Zweck.

Durch ein derartiges Mitteln über der Zeit in Schritt 26 und/oder auch schon vorher in Schritt 22 kann zudem ein Rauschen, beispielsweise ein Photonenrauschen der verwendeten Kameraeinrichtung, verringert werden. Eine Mittelung über mehrere Bilder im Ortsfrequenzbereich zu diesem Zweck ist vor allem dann interessant, wenn eine Translationsbewegungen der Kameraeinrichtung oder des gesamten Bildes oder auch eine Bewegung in einem Teil eines Bildes vorliegt. Wie bereits oben erläutert können derartige Bewegungen im Ortsfrequenzbereich vergleichsweise leicht erkannt werden. Diese Bewegungen können dann von der Mittelung ausgenommen werden, da andernfalls durch eine Mittelung bewegter Objekte unerwünschte Artefakte produziert werden könnten. Insbesondere lässt sich die Bewegung im Ortsfrequenzbereich einfach, z.B. linear oder durch einen einfachen Fit, über der Zeit beschreiben und für die Mittelung kompensieren. Somit ist im Ortsfrequenzbereich eine Mittelung über der Zeit auch bei bewegten Bildern auf relativ einfache Weise möglich. Im Zeitbereich wäre eine derartige Mitteilung schwierig.

Zudem kann eine Filterung, beispielsweise eine Wiener-Filterung, durchgeführt werden, mit welcher bei der Mittelung Beträge der komplexen Spektraldichte, welche größer sind als ein vorgegebener Schwellenwertbetrag, beispielsweise größer als ein Rauschpegel, stärker gewichtet werden. Auf diese Weise kann ein Einfluss von Rauschen effizienter vermindert werden.

Um Schärfeverluste durch Luftschlierenstörungen zu kompensieren, können zusätzlich beim Schärfen Beträge von höherfrequenten Spektraldichteanteilen verstärkt werden, beispielsweise Beträge oberhalb einer bestimmten Schwellenwertfrequenz. Diese Vorgehensweise ist für sich genommen aus dem Speckle-Imaging-Algorithmus bekannt, beispielsweise aus D. Korff, Journal oft he Optical Society of America, Vol. 63, Nr. 8, August 1973, S. 971ff. Gemäß dieser herkömmlichen Vorgehensweise kann diese Verstärkung unter Berücksichtigung der hier kürzeren zeitlichen Apertur eines Bildes von zum Beispiel 33 ms geschehen. Hilfreich hierfür ist, dass es nicht nötig ist, die Verstärkungsfaktoren zur Verstärkung der Beträge der höherfrequenten Spektraldichteanteile exakt zu bestimmen. Abhängig von Eigenschaften der auftretenden Luftturbulenzzellen oder Luftschlieren kann die Verstärkung abhängig von einer jeweiligen Kachel unterschiedlich, insbesondere auch dynamisch, d.h. zeitlich veränderlich von Bildfolge zu Bildfolge, eingestellt werden.

Grundsätzlich kann jeder herkömmliche Schärfungsalgorithmus verwendet werden. Die Schärfung kann abhängig von einer jeweiligen Anwendung für jede Kachel, beispielsweise jede der in Figur 3 beispielhaft dargestellten Kacheln, unterschiedlich von Kachel zu Kachel und dynamisch in der Zeit veränderlich durchgeführt werden. Die Schärfung kann beispielsweise wie für sich genommen herkömmlich bekannt durch Faltung über das Bild bzw. die Kachel im Ortsbereich oder durch Verstärken der Beträge im Frequenzbereich erfolgen. In anderen Worten kann für das Schärfen eine vorherige Transformation eingesetzt werden, oder die Schärfung kann im Ortsbereich erfolgen.

Dabei ist zu beachten, dass Unschärfe unter anderem auch durch Luftschlieren hervorgerufen werden kann, wobei die Unschärfe mit stärker werdenden Luftschlierenstörungen zunimmt. Bei Ausführungsbeispielen kann das Schärfen daher abhängig von auftretenden Luftschlierenstörungen erfolgen.

Bei einer vereinfachten Vorgehensweise kann dabei die gleiche Schärfung auf ein gesamtes Feld angewendet werden. Bei einem bevorzugten Ausführungsbeispiele wird jedoch wie oben erläutert das Flimmern für jede Kachel bestimmt (beispielsweise durch Bestimmung des Parameters $x_0$ und dessen Analyse über der Zeit), und das Schärfen kann abhängig von dem bestimmten Flimmern erfolgen. Beispielsweise kann bei stärkerem Flimmern eine stärkere Schärfung durchgeführt werden, da ein höheres Flimmern im Regelfall auch mit einer höheren Unschärfe einhergeht.

In Schritt 27 werden dann die Kacheln wieder zu einem einzigen Bild zusammengesetzt. Werden die oben genannten Kriterien bei der Kachelbildung berücksichtigt, kann dies durch einfaches Summieren der Kacheln geschehen. Ansonsten - wenn zum Beispiel keine geeignete Fensterfunktion verwendet wird - müssen Werte im Überlappungsbereich von Kacheln gegebenenfalls gemittelt werden. Auch andere Vorgehensweisen sind möglich.

Gegenüber dem herkömmlichen Speckle-Algorithmus ist die Berechnung in Schritt 22 unter Verwendung des Argumentes der Spektraldichte und dessen frequenzproportionale Änderung vereinfacht, sodass eine schnellere Berechnung möglich ist. Auch wird beim herkömmlichen Speckle-Imaging-Algorithmus nur eine einzige Kachelgröße verwendet, und nicht mehrere Durchläufe, wie es bei manchen Ausführungsbeispielen der vorliegenden Anmeldung der Fall ist. Das unter Bezugnahme auf Figur 2 beschriebene Verfahren kann auf verschiedene Weise variiert und erweitert werden. Manche dieser Variationen und Erweiterungen werden im Folgenden ausführlicher erläutert.

Das Verfahren der Figur 2 kann wie erwähnt zunächst auf Schwarz-Weiß- bzw. Grauwert-Videos angewendet werden. Eine Erweiterung auf farbige Videos oder andere farbige Abfolgen von Bildern ist jedoch möglich. Bei einem Ausführungsbeispiel wird dabei das Unterteilen in Kacheln und die Transformation bzw. Rücktransformation (Schritte 20, 21, 23 und gegebenenfalls 25 der Figur 2) getrennt für verschiedene Farbkanäle durchgeführt. Beispielsweise werden bei einer Abfolge von RGB-(Rot, Grün, Blau) Bildern diese Schritte getrennt für den roten Kanal, den grünen Kanal und den blauen Kanal durchgeführt. Der Schritt 22 und die Mittelung bei 26 können dann auf Grauwerten, welche auf Basis der roten, grünen und blauen Komponenten gebildet werden, durchgeführt werden. Beispielsweise wird in Schritt 22 aus den Spektraldichten für roten, grünen und blauen Kanal eine Spektraldichte für Grauwerte durch Mittelung gebildet, und auf Basis dieser Spektraldichte für Grauwerte werden dann durchzuführende Änderungen an dem Argument der Spektraldichte wie oben beschrieben ermittelt. Diese Änderungen können dann auf die Spektraldichten für roten, grünen und blauen Kanal angewendet werden.

Die Mittelung kann dabei auch als gewichtete Mittelung erfolgen. Dabei kann beispielsweise berücksichtigt werden, dass das menschliche Auge für grünes Licht empfindlicher ist als für rotes oder blaues Licht, sodass der grüne Kanal höher gewichtet werden kann als der rote oder blaue Kanal. Ähnlich kann mit dem Mitteln und/oder Schärfen des Schrittes 26 verfahren werden.

Zudem kann bei manchen Ausführungsbeispielen das Verfahren der Figur 2 dahingehend erweitert werden, dass "echte" Bewegungen von unerwünschten Bewegungen (beispielsweise durch die erwähnten Luftschlieren) unterschieden werden können. Derartige "echte" Bewegungen können beispielsweise Objekte sein, die sich durch die aufgenommenen Bilder bewegen, beispielsweise ein fahrendes Kraftfahrzeug oder eine sich bewegende Person.

Bei manchen Ausführungsbeispielen kann ein sich bewegendes Objekt dadurch erkannt werden, dass das Argument der Spektraldichte in einer Kachel stärker variiert als in benachbarten Kacheln im gleichen Zeitabschnitt, beispielsweise um mehr als eine vorgegebene Schwelle stärker variiert. Beispielsweise kann in einer betrachteten Kachel die Werte des Arguments der Spektraldichte in einem Zeitabschnitt um +/- 90 Grad variieren, während das Argument im gleichen Zeitabschnitt in benachbarten Kacheln nur um +/- 30 Grad variiert. Dies lässt darauf schließen, dass sich in der betrachteten Kacheln ein sich bewegendes Objekt befindet, während die Änderung des Arguments in den benachbarten Kacheln beispielsweise durch Luftschlieren und dergleichen hervorgerufen sein kann.

Wird auf diese Weise festgestellt, dass sich in einer bestimmten Kachel ein bewegliches Objekt befindet, sind verschiedene Vorgehensweisen möglich. Bei manchen Ausführungsbeispielen kann eine derartige Kachel einfach ohne Restauration (d.h. ohne beispielsweise den Schritt 22 und/oder den Schritt 26 für diese Kachel durchzuführen) angezeigt werden. Bei anderen Ausführungsbeispielen können die Komponenten der Veränderungen zum Beispiel des Arguments der Spektraldichte für das bewegte Objekt und für das Flimmern voneinander getrennt werden, um beispielsweise nur die Komponente für das Flimmern auszugleichen, ohne die Komponente für das sich bewegende Objekt zu verfälschen. Bei manchen Ausführungsbeispielen kann dies anhand der Größe der Veränderung im Ortsbereich gemacht werden. Beispielsweise wird die Fläche von großflächigem Flimmern, verursacht durch großflächige Luftschlieren, häufig größer sein als die von kleinen, sich bewegenden Objekten. Gegebenenfalls kann dies auf Basis der Kachelgrößen bei den verschiedenen Durchläufen geschehen.

Bei anderen Ausführungsbeispielen wird eine Unterscheidung anhand der Bewegungsrichtung getroffen. Ein sich bewegendes Objekt bewegt sich häufig während eines Zeitabschnitts gleichmäßig oder zumindest immer in die gleiche Richtung, während beispielsweise ein durch Luftschlieren verursachtes Flimmern fluktuierenden Charakter besitzt, sodass hier die Verschiebungen die Richtung ändern können. Auch andere Eigenschaften, mit denen sich Störungen durch Luftschlieren oder andere unerwünschte Bewegungen von normal bewegenden Objekten unterscheiden, können als Grundlage für die Unterscheidung genutzt werden.

Wie bereits erläutert, können die oben erläuterten Ausführungsbeispiele auf eine Abfolge von Bildern, beispielsweise Bildern eines Videos, angewendet werden. Auf diese Weise können Störungen wie Luftschlieren oder Erschütterungen kompensiert werden. Es ist jedoch ebenso möglich, als Ergebnis nur ein einzelnes Bild auszugeben, wie bei herkömmlichen Einzelbildfotoapparaten üblich. In diesem Fall wird von einer Kameraeinrichtung wie der in Figur 1 dargestellten Kameraeinrichtung eine Abfolge von Bildern aufgenommen, welche das schlussendlich auszugebende Bild sowie eine Reihe von Bildern vor und nach dem Bild, um das oben beschriebene Verfahren durchführen zu können, umfasst. Dabei können derartige Aufnahmen mit hoher Bildwiederholfolge aufgenommen werden, beispielsweise mit 300 Aufnahmen in der Sekunde. Auf diese Weise kann in dem schlussendlich ausgegebenen Einzelbild wie oben beschrieben eine Verzeichnung bzw. Verschiebungen durch Flimmern kompensiert werden, wobei optional sich bewegende Objekte wie beschrieben berücksichtigt werden können. Zudem kann eine Schärfung durchgeführt werden (Schritt 26 in Figur 2), welche an erkannte Störungen, beispielsweise Luftschlierenstörungen, angepasst ist.

Wie bereits erwähnt, kann das Verfahren der Figur 2 auch zur Bildstabilisierung, d.h. zur Kompensation von Erschütterungen oder Verwacklern, verwendet werden. Dabei kann es ausreichend sein, nur eine Kachelgröße zu verwenden (d.h. einen Durchlauf der Schritte 21 bis 23 der Figur 2 zu verwenden). Bei dieser Anwendung wird typischerweise nur die translatorische Verschiebung, d.h. eine Verschiebung in eine bestimmte Richtung, kompensiert. Hierzu kann wie beschrieben eine Analyse der Verschiebung (d.h. der Änderung des Arguments der Spektraldichte nach der Transformation bei 21) über der Zeit durchgeführt werden, wobei Verschiebungen aufgrund von Erschütterungen von Objektbewegungen (wie oben beschrieben) unterschieden werden können. So kann die Verschiebung bei manchen Ausführungsbeispielen sehr genau kompensiert werden, teilweise mit einer Genauigkeit unterhalb eines Pixels.

Es kann auch ein Vielfaches der Verschiebung im Rahmen der Bildstabilisierung ausgegeben werden. Dies wird am Beispiel eines Operationsmikroskops als optisches System (beispielsweise optisches System 16 der Figur 1) erläutert. Angenommen, das Operationsmikroskop weist eine zehnfache Vergrößerung auf und wird bereits am Operationsmikroskopkopf mit einem Monitor über ein Okular angezeigt. In einem solchen Anwendungsfall kann es unter Berücksichtigung der Bewegung des Operationsmikroskopkopfes auf einem Arm, welcher einige Meter lang sein kann, sinnvoll sein, das Bild auf dem Monitor nicht vollständig zu stabilisieren, sondern es entgegengesetzt zur Operationsmikroskopkopfbewegung auf dem Monitor des Operationsmikroskopkopfs zu bewegen, um dem Betrachter, der sich bezüglich des Patienten und dem Fußboden nicht bewegt, ein stabiles Bild zu zeigen. Beispielsweise kann die Bewegung des Bildes auf dem Monitor dann je nach optischem Aufbau das -1/10-fache oder das +1/10-fache der von der Kamera in dem Operationsmikroskopkopf aufgenommenen Bewegung sein. In diesem Fall wird also nicht die gesamte Verschiebung kompensiert, sondern bewusst nur ein Teil oder ein Vielfaches hiervon. Hierdurch kann in diesem Beispielfall die durch die Arbeit des Operateurs hervorgerufene Bewegung des von dem Operationsmikroskop aufgenommenen Objekts fehlerfrei wiedergegeben und auch eine Bildbewegung des Monitorbildes erzeugt werden. Somit kann dem Operateur ein intuitiv verständliches Bild dargestellt werden. Eine durch die Bewegung des Operationsmikroskopkopfs hervorgerufene geringe Drehung oder Vergrößerungsänderung kann mit entsprechend kleinen Kacheln zumindest näherungsweise ebenfalls stabilisiert werden, wobei für diese Stabilisierung jede kleine Kachel eine zu anderen Kacheln geringfügig andere translatorische Verschiebung erhält.

Das obige Beispiel eines Operationsmikroskops dient lediglich zur weiteren Veranschaulichung insbesondere einer nicht vollständigen Kompensation der Verschiebung und ist nicht als einschränkend auszulegen, da die dargestellten Ausführungsbeispiele generell auf Kameraeinrichtungen mit optischen Systemen wie unter Bezugnahme auf Figur 1 beschrieben angewendet werden können.

**Patentansprüche**

1. Computerimplementiertes Verfahren zur Bildbearbeitung, umfassend:

   Bereitstellen einer Abfolge von Bildern,
   Unterteilen der Bilder in eine oder mehrere Kacheln,
   Transformieren der Kacheln in den Ortsfrequenzraum,
   Identifizieren von Verschiebungen durch Auswertung des Arguments der Spektraldichtefunktion der Kacheln im Ortsfrequenzraum durch Bestimmen eines Faktors, um den sich das Argument der Spektraldichtefunktion von Bild zu Bild frequenzproportional ändert,
   Kompensieren zumindest eines Teils der identifizierten Verschiebungen,
   Rücktransformieren der Kacheln in den Ortsraum, und
   Zusammensetzen der rücktransformierten Kacheln,
   wobei das Identifizieren auf Basis von Frequenzen unterhalb eines Frequenzschwellenwertes erfolgt.

2. Verfahren nach Anspruch 1, weiter umfassend ein Schärfen über einander entsprechende Kacheln der Abfolge von Bildern vor dem Zusammensetzen.

3. Verfahren nach Anspruch 1, weiter umfassend ein Mitteln über einander entsprechende Kacheln der Abfolge von Bildern vor dem Zusammensetzen.

4. Verfahren nach Anspruch 3, weiter umfassend ein Schärfen über einander entsprechende Kacheln der Abfolge von Bildern vor dem Zusammensetzen und/oder nach dem Mitteln.

5. Verfahren nach einem der Ansprüche 1-4, wobei eine Kachelgröße bei dem Unterteilen der Bilder in Kacheln in Abhängigkeit von der Größe von Luftschlieren bei der Bildaufnahme und/oder in Abhängigkeit von einer Stärke von Verwacklungen bei der Bildaufnahme festgelegt wird.

6. Verfahren einem der Ansprüche 1-5, wobei das Unterteilen, das Transformieren, das Identifizieren, das Kompensieren und das Rücktransformieren N mal, $N \geq 1$ wiederholt wird, wobei eine Größe der Kacheln bei dem Unterteilen schrittweise verkleinert wird.

7. Verfahren nach Anspruch 6, wobei sich ein Faktor, um den die Kacheln verkleinert werden, zwischen mindestens zweien der Wiederholungen unterscheidet.

8. Verfahren nach einem der Ansprüche 1-7, wobei die Bilder Farbbilder sind, wobei das Unterteilen, das Transformieren und das Rücktransformieren für jeden Farbkanal getrennt durchgeführt wird, und/oder wobei das Identifizieren der Verschiebungen anhand von Grauwerten, welche durch Mittelung der Farbkanäle erhalten werden, durchgeführt wird, wobei das Kompensieren für die Farbkanäle getrennt auf Basis des Ergebnisses des Identifizierens durchgeführt wird.

9. Verfahren nach einem der Ansprüche 1-8, wobei das Identifizieren ein Unterscheiden von Verschiebungen durch Störungen von Verschiebungen durch bewegte Objekte umfasst, wobei die Verschiebungen durch bewegte Objekte beim Ausgleich ausgenommen werden.

10. Verfahren nach einem der Ansprüche 1-9, wobei ein oder mehrere Verfahrensschritte des Verfahrens dynamisch in Abhängigkeit von den Kacheln und/oder einem Inhalt der Bilder angepasst werden.

11. Verfahren nach einem der Ansprüche 1-10, wobei ein oder mehrere Verfahrensschritte parallelisiert durchgeführt werden.

12. Vorrichtung zur Bildbearbeitung, umfassend:

    eine Recheneinrichtung mit mindestens einem Prozessor (13) und einem Speicher (14), wobei in dem Speicher (14) eine Abfolge von Bildern speicherbar ist, wobei der Prozessor eingerichtet ist, folgende Schritte durchzuführen:

    Unterteilen der Bilder in eine oder mehrere Kacheln,
    Transformieren der Kacheln in den Ortsfrequenzraum,
    Identifizieren von Verschiebungen durch Auswertung des Arguments der Spektraldichtefunktion der Kacheln im Ortsfrequenzraum durch Bestimmen eines Faktors, um den sich das Argument der Spektraldichtefunktion von Bild zu Bild frequenzproportional ändert,
    Kompensieren zumindest eines Teils der identifizierten Verschiebungen,

Rücktransformieren der Kacheln in den Ortsraum, und

Zusammensetzen der rücktransformierten Kacheln,

wobei das Identifizieren auf Basis von Frequenzen unterhalb eines Frequenzschwellenwertes erfolgt.

13. Vorrichtung nach Anspruch 12, wobei die Vorrichtung zur Durchführung des Verfahrens nach einem der Ansprüche 2-11 eingerichtet ist.

14. Vorrichtung nach Anspruch 12 oder 13, weiter umfassend ein optisches System (16) und eine mit dem optischen System (16) gekoppelte Kameraeinrichtung (10) zum Aufnehmen der Abfolge von Bildern.

15. Computerprogramm mit einem Programmcode, der, wenn er auf einer Recheneinrichtung (11) ausgeführt wird, das Verfahren nach einem der Ansprüche 1-11 durchführt.

**Claims**

1. Computer-implemented method for image processing, comprising:

providing a sequence of images,
subdividing the images into one or more tiles,
transforming the tiles into the spatial frequency domain,
identifying shifts by evaluating the spectral density function argument of the tiles in the spatial frequency domain by determining a factor by which the spectral density function argument changes, proportionally to the frequency, from image to image;
compensating at least some of the identified shifts,
transforming the tiles back into the spatial domain, and assembling the inverse-transformed tiles,
wherein identification is based on frequencies below a frequency threshold value.

2. Method according to Claim 1, further comprising a focusing over tiles corresponding to one another in the sequence of images prior to the assembly.

3. Method according to Claim 1, further comprising an averaging over tiles corresponding to one another in the sequence of images prior to the assembly.

4. Method according to Claim 3, further comprising a focusing over tiles corresponding to one another in the sequence of images prior to the assembly and/or after the averaging.

5. Method according to any of Claims 1-4, wherein a tile size when subdividing the images into tiles is set depending on the size of air schlieren during the image recording and/or depending on a strength of blurring during the image recording.

6. Method according to any of Claims 1-5, wherein subdividing, transforming, identifying, compensating and inverse transforming is repeated N times, N > 1, wherein a size of the tiles is incrementally reduced during the subdivision.

7. Method according to Claim 6, wherein a factor by which the tiles are reduced in size differs between at least two of the repetitions.

8. Method according to any of Claims 1-7, wherein the images are colour images, wherein subdividing, transforming and inverse transforming are carried out separately for each colour channel, and/or wherein shifts are identified on the basis of greyscale values obtained by averaging the colour channels, wherein the compensation for the colour channels is carried out separately on the basis of the results of the identification.

9. Method according to any of Claims 1-8, wherein the identifying includes distinguishing between shifts from interferences and shifts by moving objects, wherein the shifts by moving objects are excluded during the compensation.

10. Method according to any of Claims 1-9, wherein one or more method steps of the method are adapted dynamically depending on the tiles and/or a content of the images.

11. Method according to any of Claims 1-10, wherein one or more method steps are carried out in parallelized fashion.

12. Apparatus for image processing, comprising:
a computing device having at least one processor (13) and a memory (14), wherein a sequence of images is storable in the memory (14), wherein the processor is configured to carry out the following steps:

subdividing the images into one or more tiles,
transforming the tiles into the spatial frequency domain,
identifying shifts by evaluating the spectral density function argument of the tiles in the spatial frequency domain by determining a factor by which the spectral density function argument changes, proportionally to the frequency, from image to image;
compensating at least some of the identified shifts,

transforming the tiles back into the spatial domain, and assembling the inverse-transformed tiles,

wherein identification is based on frequencies below a frequency threshold value.

13. Apparatus according to Claim 12, wherein the apparatus is configured to carry out the method according to any of Claims 2-11.

14. Apparatus according to Claim 12 or 13, further comprising an optical system (16) and a camera device (10), coupled to the optical system (16), for recording the sequence of images.

15. Computer program having program code which, when executed on a computing device (11), carries out the method according to any of Claims 1-11.

## Revendications

1. Procédé de traitement d'image implémenté par ordinateur, comprenant :

fourniture d'une séquence d'images,
subdivision des images en un ou plusieurs carreaux,
transformation des carreaux en l'espace de fréquences spatiales,
identification de décalages en évaluant l'argument de la fonction de densité spectrale des carreaux dans l'espace de fréquences spatiales en déterminant un facteur duquel l'argument de la fonction de densité spectrale change proportionnellement à la fréquence d'une image à l'autre, compensation d'au moins une partie des décalages identifiés,
retransformation des carreaux dans l'espace spatial, et assemblage des carreaux retransformés,
l'identification étant effectuée sur la base de fréquences inférieures à une valeur de seuil de fréquence.

2. Procédé selon la revendication 1, comprenant en outre une accentuation de la netteté sur des carreaux mutuellement correspondants de la séquence d'images avant l'assemblage.

3. Procédé selon la revendication 1, comprenant en outre le calcul de la moyenne sur des carreaux mutuellement correspondants de la séquence d'images avant l'assemblage.

4. Procédé selon la revendication 3, comprenant en outre une accentuation de la netteté sur des carreaux mutuellement correspondants de la séquence d'images avant l'assemblage et/ou après le calcul de la moyenne.

5. Procédé selon l'une des revendications 1 à 4, une taille de carreau lors de la subdivision des images en carreaux étant fixée en fonction de la taille de traînées dues à des turbulences atmosphériques lors de l'enregistrement d'image et/ou en fonction d'une intensité de bougés lors de l'enregistrement d'image.

6. Procédé selon l'une des revendications 1 à 5, la subdivision, la transformation, l'identification, la compensation et la retransformation étant répétées N fois, N > 1, une taille des carreaux étant progressivement réduite lors de la subdivision.

7. Procédé selon la revendication 6, un facteur duquel les carreaux sont réduits différant entre au moins deux des répétitions.

8. Procédé selon l'une des revendications 1 à 7, les images étant des images en couleurs, la subdivision, la transformation et la retransformation étant mises en œuvre séparément pour chaque canal de couleur, et/ou l'identification des décalages étant mise en œuvre à l'aide de valeurs de gris, qui sont obtenues par calcul de la moyenne des canaux de couleur, la compensation des canaux de couleur étant mise en œuvre séparément sur la base du résultat de l'identification.

9. Procédé selon l'une des revendications 1 à 8, l'identification comprenant une distinction de décalages par des perturbations de décalages par des objets en mouvement, les décalages par des objets en mouvement étant exclus lors de la compensation.

10. Procédé selon l'une des revendications 1 à 9, une ou plusieurs étapes de procédé du procédé étant adaptées dynamiquement en fonction des carreaux et/ou d'un contenu des images.

11. Procédé selon l'une des revendications 1 à 10, une ou plusieurs étapes de procédé étant mises en œuvre de manière parallèle.

12. Dispositif de traitement d'images, comprenant :
un système informatique avec au moins un processeur (13) et une mémoire (14), une séquence d'images pouvant être stockée dans la mémoire (14), le processeur étant mis au point pour mettre en œuvre les étapes suivantes :

subdivision des images en un ou plusieurs carreaux,
transformation des carreaux en l'espace de fréquences spatiales,

identification de décalages en évaluant l'argument de la fonction de densité spectrale des carreaux dans l'espace de fréquences spatiales en déterminant un facteur duquel l'argument de la fonction de densité spectrale change proportionnellement à la fréquence d'une image à l'autre, compensation d'au moins une partie des décalages identifiés,

retransformation des carreaux dans l'espace spatial, et assemblage des carreaux retransformés,

l'identification étant effectuée sur la base de fréquences inférieures à une valeur de seuil de fréquence.

13. Dispositif selon la revendication 12, le dispositif étant mis au point pour mettre en œuvre le procédé selon l'une des revendications 2 à 11.

14. Dispositif selon la revendication 12 ou 13, comprenant en outre un système optique (16) et un système de caméra (10) couplé au système optique (16) pour enregistrer la séquence d'images.

15. Programme informatique avec un code de programme qui, lorsqu'il est exécuté sur un système de calcul (11), met en œuvre le procédé selon l'une des revendications 1 à 11.

Fig. 1

Unterteilen in Kacheln — 20

Transformation — 21

Ausgleichen von Verschiebungen — 22

Rücktransformation — 23

Gewünschte Durchlaufanzahl erreicht? — 24

NEIN

JA

Verkleinere Kacheln — 25

Mitteln und/oder Schärfen — 26

Zusammensetzen — 27

# Fig. 2

# Fig. 3

# Fig. 4

EP 3 384 461 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009108050 A1

- WO 2011139150 A1

**In der Beschreibung aufgeführte Nicht-Patentliteratur**

- **C.J. CARRANO**. Speckle Imaging over Horizontal Paths. Lawrence Livermore National Laboratory, 08 July 2002
- **G. WEIGELT** ; **B. WIRNITZER**. *OPTICS LETTERS*, 1983, vol. 8 (7), 389ff
- **TAYLOR W. LAWRENCE et al.** *OPTICAL ENGINEERING*, 1992, vol. 31 (3), 627ff

- **DAVID J. TOLHURST et al.** Amplitude spectra of natural images. *Ophthalmic and Physiological Optics*, 01 April 1992, 229-232
- **D. KORFF**. *Journal oft he Optical Society of America*, August 1973, vol. 63 (8), 971ff